**Europäisches Patentamt**

**European Patent Office**

**Office européen des brevets**

(11) Veröffentlichungsnummer: **0 264 003 B1**

(12) **EUROPÄISCHE PATENTSCHRIFT**

(45) Veröffentlichungstag der Patentschrift:
**17.10.90**

(51) Int. Cl.⁵: **B29C 51/26**

(21) Anmeldenummer: **87113868.1**

(22) Anmeldetag: **23.09.87**

(54) Verfahren und Vorrichtung zum Herstellen von mit hinterschäumten Bezügen versehenen Polstern, insbesondere Automobilsitzpolstern.

(30) Priorität: **04.10.86 DE 3633922**

(43) Veröffentlichungstag der Anmeldung:
**20.04.88 Patentblatt 88/16**

(45) Bekanntmachung des Hinweises auf die Patenterteilung:
**17.10.90 Patentblatt 90/42**

(84) Benannte Vertragsstaaten:
**BE DE ES FR GB IT NL SE**

(56) Entgegenhaltungen:
**DE-A- 2 813 042**
**DE-A- 3 034 973**
**DE-C- 3 633 919**
**FR-A- 2 202 774**
**FR-A- 2 274 441**
**FR-A- 2 300 666**
**FR-A- 2 564 377**
**US-A- 4 137 030**

(73) Patentinhaber: **BAYER AG,**
**D-5090 Leverkusen 1 Bayerwerk(DE)**
Patentinhaber: **Fritsche-Möllmann GmbH & Co. KG,**
**Hansaring 6, D-4531 Lotte(DE)**

(72) Erfinder: **Onnenberg, Volker, Dipl.-Ing., Schässburger**
**Gasse 2, D-5267 Wiehl(DE)**
Erfinder: **Möllmann, Günter, Am Höhneberg 2,**
**D-4506 Hagen(DE)**

(74) Vertreter: **Müller, Heinz-Gerd, Dipl.-Ing., BAYER AG**
**Konzernverwaltung RP Patentabteilung,**
**D-5090 Leverkusen 1, Bayerwerk(DE)**

ACTORUM AG

## Beschreibung

Die Erfindung betrifft ein Verfahren und ein Vorrichtung zum Herstellen von mit hinterschäumten Bezügen versehenen Polstern, insbesondere Automobilsitzpolstern, wobei ein Bezugstoffabschnitt auf eine Formwerkzeughälfte aufgelegt und gegen die Umrandung des Formhohlraumes gedrückt, an den Formhohlraum Vakuum angelegt und unter Überwindung des auf den Bezugstoffabschnitt einwirkenden Anpreßdruckes dieser in den Formhohlraum eingesaugt und der Kontur des Formhohlraumes angepaßt wird und anschließend ein schäumfähiges Reaktionsgemisch in den Formhohlraum eingebracht wird und nach dem Aushärten des Schaumstoffkerns das fertige Polster entnommen wird.

Um ein Polster mit einer optisch einwandfreien Konturierung zu erhalten, ist es wichtig, daß bei der Herstellung der Bezugstoffabschnitt durch das angelegte Vakuum faltenfrei, bzw. an gewissen Stellen mit beabsichtigten Falten, in den Formhohlraum eingesaugt wird. Hierzu bedarf es eines kontrollierten Nachgleitens des Bezugstoffes. Diese Kontrolle wird unter Verwendung eines Spannrahmens ausgeübt, welcher den Bezugstoffabschnitt auf den den Formhohlraum umgebenden Rand der unteren Formwerkzeughälfte drückt, und zwar mit entsprechender Kraft.

Man hat schon versucht, das Nachgleiten des Bezugstoffabschnittes unter dem Spannrahmen durch einen Druckluftfilm zu steuern (DE-PS 3034973). Diese Maßnahme hat sich jedoch in der Praxis nicht immer bewährt. Insbesondere, wenn es sich um nicht dehnfähige Bezugstoffe handelt, treten vermehrte Schwierigkeiten auf.

Es besteht die Aufgabe, die Steuerung des Anpreßdruckes, mit welchem der Bezugstoffabschnitt beim Nachgleiten auf den den Formhohlraum umgebenden Rand beaufschlagt wird, so zu verbessern, daß der Bezugstoffabschnitt in gewünschter Weise nachgleitet, damit er sich überall an die Wandung des Formhohlraumes straff anlegt.

Die Aufgabe wird dadurch gelöst, daß der auf den Bezugstoffabschnitt einwirkende Anpreßdruck einer Pulsation unterworfen wird.

Diese Maßnahme hat den Vorteil, daß der pulsierende Druck entsprechend seiner Frequenz den Bezugstoffabschnitt bei seinem Nachgleiten immer wieder entlastet und belastet. Dadurch wird eine unerwünschte Faltenbil dung bereits im Moment des Entstehens sofort unterdrückt. Notwendige Falten, wie sie insbesondere in den Ecken von Polstern bei nicht dehnfähigen Bezugstoffen eingelegt werden müssen, bilden sich in reproduzierbarer Weise.

Die anzulegende pulsationsfrequenz hängt insbesondere von der Beschaffenheit des Bezugstoffabschnittes hinsichtlich seiner Steifigkeit, Dehnfähigkeit und Gleitfähigkeit ab.

Vorzugsweise legt man eine Pulsationsfrequenz von 20 bis 400 Schwingungen pro Minute an. Dieser Bereich dürfte für die meisten Bezugstoffarten geeignet sein; insbesondere dürfte normalerweise der Bereich zwischen 35 bis 200 Schwingungen pro Minute sehr gute Ergebnisse bringen. Für den Fachmann ist es ein leichtes, durch Versuche für den Einzelfall die optimale Pulsationsfrequenz zu ermitteln.

Gemäß einer besonderen Ausführungsform wird die Pulsation nur stellenweise einwirken gelassen. Diese Maßnahme ist immer dann von Vorteil, wenn nur an spezifischen Stellen, über den Umfang des Formhohlraumes gesehen, Schwierigkeiten beim Einziehen des Bezugstoffabschnittes auftreten, wie beispielsweise bei der Herstellung von Sitzpolstern im Bereich der Ecken.

Vorzugsweise wird über den Umfang des Formwerkzeuges unterschiedlicher Anpreßdruck angelegt.

Auch diese Maßnahme dient dazu, an besonders kritischen Stellen im Zusammenwirken mit der geeigneten Pulsationsfrequenz den Einziehvorgang zu verbessern.

Insbesondere kann es auch zweckmäßig sein, die Pulsationsfrequenz und/oder den Anpreßdruck während eines Einziehvorganges zu verändern.

Es versteht sich, daß des Verfahrensergebnis, d. h. das gefertigte Polster, in bezug auf sein äußeres Aussehen reproduzierbar herstellbar sein muß, da derartige Polster in aller Regel Serienartikel darstellen, bei denen auf Konturtreue Wert gelegt werden muß.

Die Vorrichtung zum Herstellen von mit hinterschäumten Bezügen versehenen Polstern, insbesondere Automobilsitzpolstern, geht aus von einem Formwerkzeug mit zugeordnetem Mischkopf, wobei mindestens eine Formwerkzeughälfte in der Wandung des Formhohlraumes an eine Vakuumquelle angeschlossene Saugöffnungen aufweist, und dieser Formwerkzeughälfte ein auflegbarer Spannrahmen für den in den Formhohlraum einzulegenden Bezugstoffabschnitt zugeordnet ist.

Das Neue ist darin zu sehen, daß dem Spannrahmen ein Pulsator zugeordnet ist.

Der Fachmann hat die Wahl, welche Art von Pulsator er verwendet. Pulsatoren mit umlaufender Unwucht sind vorteilhaft verwendbar, wenn nur an gewissen begrenzten Stellen Pulsation ausgeübt werden soll. Ist über den gesamten Umfang des Formhohlraumes Pulsation erforderlich, so bietet sich eine pneumatische oder hydraulische Pulsationsbeaufschlagung an, wozu über den Umfang verteilt mehrere Pulsationselemente in Form von Kolben-Zylinder-Einheiten verwendbar sind.

Aus konstruktiven Gründen ist es vorteilhaft, wenn der Spannrahmen nicht selbst pulsiert, sondern wenn der Spannrahmen vorzugsweise aus einem Tragrahmen besteht, welchem mindestens eine federnd mit ihm verbundene Spannleiste zugeordnet ist, und der Pulsator an mindestens einer Stelle auf die Spannleiste einwirkt.

Auf diese Weise ist das Zusammenspiel von Anpreßdruck und Pulsation besonders günstig zu handhaben.

Vorzugsweise besteht die Spannleiste aus mehreren Abschnitten. Dies ist vorteilhaft, weil eine einzige umlaufende Spannleiste außerordentlich genau gearbeitet sein müßte, damit überall der gleiche oder der stellenweise gewünschte, unterschiedliche Anpreßdruck vorhanden ist. Durch mehrere Abschnitte läßt sich dieses Kriterium einfacher erreichen. Beispielsweise in den Eckenbereichen, wo Falten gebildet werden müssen, wird die Spannleiste mehr Abstand besitzen müssen oder man verzichtet auf sie an dieser Stelle ganz. Sie kann auch Führungsausnehmungen zur Faltenbildung aufweisen.

Gemäß einer weiteren besonderen Ausführungsform ist mindestens zwei Abschnitten jeweils ein eigener Pulsator zugeordnet.

Diese Maßnahme erlaubt es, die verschiedenen Abschnitte mit unterschiedlicher Pulsation zu beaufschlagen, und ist insbesondere dann mit Vorteil anzuwenden, wenn an verschiedenen Stellen unterschiedlich viel Bezugstoff pro Zeiteinheit nachgezogen werden muß.

Eine besonders vorteilhafte Ausführungsform besteht darin, daß zwischen Tragrahmen und Spannleiste, über den Umfang des Formhohlraumes gesehen, Federelemente angeordnet sind, welche mindestens teilweise zueinander unterschiedliche Steifigkeit aufweisen.

Selbstverständlich können auch alle Federelemente gleiche Steifigkeit besitzen, wenn man im Einzelfalle damit auskommt. Als Federelemente eignen sich neben Spiralfedern insbesondere Gummifedern. Durch die Verwendung von Federelementen unterschiedlicher Steifigkeit kann man erreichen, daß an manchen Stellen mit "harter" Pulsation und an anderen Stellen mit "weicher" Pulsation gearbeitet wird.

Eine weitere besondere Ausführungsform sieht vor, daß mehrere Spannleisten parallel angeordnet sind.

Dadurch ist eine bessere Einflußnahme auf den Gleitvorgang des Bezugstoffabschnittes möglich.

Vorzugsweise sind die parallel angeordneten Spannleisten wechselweise mit Pulsation beaufschlagbar.

Dadurch wird der Nachgleitvorgang nicht nur zeitlich, sondern auch örtlich in kleinste Intervalle unterteilt und die dem Formhohlraum nächstgelegene Spannleiste kann nur soviel Bezugstoff nachgleiten lassen, wie die weiter außen liegende vorher freigegeben hat.

Dabei kann der Abstand der parallelen Spannleisten voneinander von Einfluß sein, weshalb man diesen Abstand vorzugsweise einstellbar macht.

Vorzugsweise ist in der Trennebene der unteren Hälfte eine mit dem Spannrahmen bzw. der Spannleiste korrespondierende, elastische Dichtung angeordnet.

Diese Maßnahme erlaubt ein festes Anpressen des Bezugstoffabschnittes auf diese Dichtung während der Druckphasen der Pulsation, so daß der Bezugstoffabschnitt während dieses Intervalls vom Spannrahmen so fest niedergehalten wird, daß momentan nur die vorher nachgelassene Menge an Bezugstoff in den Formhohlraum gleiten kann.

Die neue Vorrichtung läßt sich sinngemäß auch auf sogenannten Formschäumanlagen, wie Rundtische oder umlaufende Bandanlagen, verwenden. Bei solchen Formschäumanlagen werden im Sinne einer rationellen Fertigung die einzelnen oder mehrere Verfahrensschritte jeweils auf besonderen Stationen ausgeübt. So läßt sich beispielsweise das Einlegen des Bezugstoffabschnittes auf einer ersten Station, das Einbringen des Reaktionsgemisches auf einer zweiten, das Verschließen des Formwerkzeuges auf einer dritten, das Aushärten auf einer vierten und das Entformen des fertigen Polsters auf einer fünften Station durchführen.

In der Zeichnung ist die neue Vorrichtung in einem Ausführungsbeispiel rein schematisch dargestellt und nachstehend näher erläutert. In der Darstellung wurden der besseren Übersichtlichkeit halber und weil es sich für den Fachmann um Selbstverständlichkeiten handelt, die obere Formwerkzeughälfte sowie der Mischkopf zum Einbringen eines Reaktionsgemisches weggelassen. Es zeigen:

Fig. 1 einen Schnitt durch die Vorrichtung,
Fig. 2 eine Draufsicht auf die Vorrichtung und
Fig. 3 eine Abwandlung mit parallel angeordneten Spannleisten in der Draufsicht.

Auf einer unteren Formwerkzeughälfte 1 ist ein Spannrahmen 2 aufgelegt. Die untere Formwerkzeughälfte 1 enthält einen Formhohlraum 3, dessen Wandung 4 Saugöffnungen 5 aufweist, welche über Kanäle 6 mit einer Vakuumkammer 7 verbunden sind. Diese ist über eine Saugleitung 8 an ein nicht dargestelltes Vakuumreservoir angeschlossen. Der Spannrahmen 2 liegt unter Zwischenlage eines Bezugstoffabschnittes 9 auf dem den Formhohlraum 3 umgebenden Rand 10, welcher gleichzeitig die Formtrennebene darstellt, auf. Der Spannrahmen 2 besteht aus einem Tragrahmen 11, welcher über Scharniere 12 an der Formwerkzeughälfte 1 fixiert ist. An dem Tragrahmen 11 sind Spannleisten 13, 14 über Federelemente 15, 16 (Gummifedern) gehalten. Einstellbare Anschlagbolzen 17, 18 begrenzen den Pulsationshub der Spannleisten 13, 14 in Richtung Umrandung 10. Den Spannleisten 13, 14 zugeordnet ist in der Umrandung 10 eine elastische Dichtung 19. Die Spannleisten 13, 14 tragen Kolben 20, 21, welche in Zylindern 22, 23 geführt sind. Die Zylinder 22 sind über eine Sammelleitung 24 und ein 4-Wegeventil 25 und die Zylinder 23 sind über eine Sammelleitung 26 und ein 4-Wegeventil 27 mit einem Druckluftkessel 28 verbunden. Dieser wird von einem Verdichter 29 gespeist. Die 4-Wegeventile 25, 27 sind mit unterschiedlicher Frequenz elektromagnetisch umschaltbar. Die Federelemente 15, 16 besitzen unterschiedliche Härte; die Anschlagbolzen 17, 18 sind auf unterschiedliche Hubhöhe eingestellt.

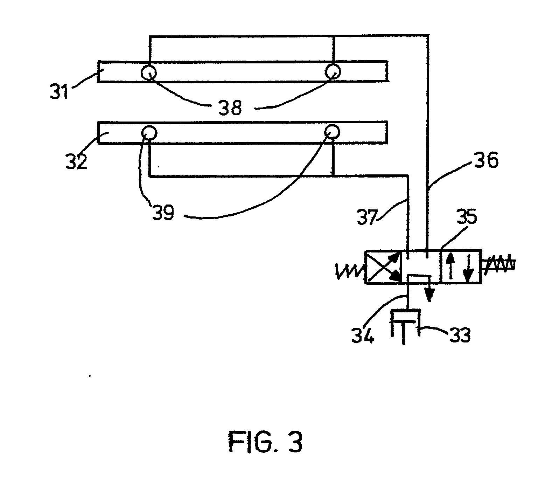

In Fig. 3 sind zwei Spannleisten 31, 32 mit einstellbarem Abstand parallel zueinander angeordnet. Von einer Druckluftquelle 33 (vorhandenes Druckluftnetz) führt eine Leitung 34 zu einem sogenannten 4/3-Wegeventil 35 mit elektromagnetischer Betätigung und Rückstellfeder, Von diesem führen zwei Sammelleitungen 36, 37 zu Kolben-Zylinder-Einheiten 38, 39. Das 4/3-Wegeventil 35 ist so aufgebaut, daß bei seinem pulsierenden Umschalten die Kolben-Zylinder-Einheiten 38, 39 abwechselnd beaufschlagt und entlüftet werden und dementsprechend die Spannleiste 31 Druck ausübt, während die Spannleiste 32 entlastet ist und umgekehrt.

Verfahrensbeispiel

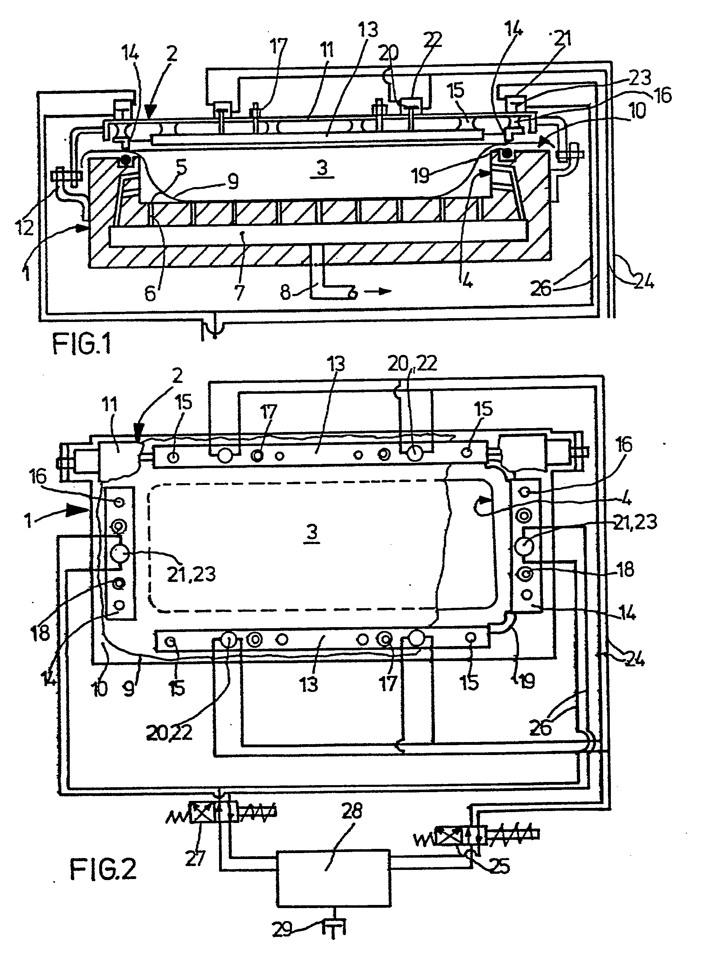

Verwendet wird die Vorrichtung gemäß Fig. 1, 2. Bei hochgeklapptem Spannrahmen 2 wird über Umrandung 10 und den Formhohlraum 3 ein Bezugstoffabschnitt 9 aus einem rückseitig versiegelten Velourstoff aufgelegt, der Spannrahmen 2 herabgeklappt und verriegelt. Dadurch üben die Spannleisten 13 infolge der weicheren Federelemente 15 einen geringeren Anpreßdruck aus als die Spannleiste 14 infolge der härteren Federelemente 16. Nun wird an den Formhohlraum 3 Vakuum angelegt und die Spannleisten 13, 14 in Pulsation versetzt. Hierzu wird das 4-Wegeventil 25 mit einer Frequenz von 50 Umschaltungen pro Minute und das 4-wegeventil 27 mit einer Frequenz von 70 Umschaltungen pro Minute betätigt. Dementsprechend pulsieren die Spannleisten 13 mit 50 Schwingungen pro Minute und die Spannleisten 14 mit 70 Schwingungen pro Mintue. Mit jeder Hubbewegung wird der Bezugstoffabschnitt neu durch das an den Formhohlraum 3 angelegte Vakuum von 0,3 bar nachgleiten gelassen. Zwischenzeitlich wird der Bezugstoffabschnitt 9 sofort wieder von den Spannleisten 13, 14 gegen die elastische Dichtung 19 gepreßt, wodurch nicht nur der Gleitvorgang momentan unterbrochen, sondern auch das Ansaugen von Falschluft vermieden wird. An den zwischen den Spannleisten 13, 14 vorhandenen freien Ecken bilden sich beim Einziehen in gewünschter Weise falten. Erforderlichenfalls kann hier mit einem Stößel nachgeholfen werden, damit sich der Bezugstoff mit seinen Falten auch in den Ecken möglichst dicht an die Wandung 4 anlegt. Nachdem der Bezugstoffabschnitt 9 überall an der Wandung 4 anliegt, wird die Pulsation abgeschaltet. Die Spannleisten 13, 14 pressen bei aufrechterhaltenem Vakumm den Bezugstoffabschnitt 9 weiterhin auf den Rand 10. Dabei wird ein Mischkopf (nicht dargestellt) über den Formhohlraum 3 geschwenkt und eine vorausbestimmte Menge eines Polyurethan-Weichschaumstoff bildenden Reaktionsgemisches eingegeben. Anschließend wird der Mischkopf wieder weggeschwenkt und die obere Formwerkzeughälfte auf den zwischen Formhohlraum 3 und Spannrahmen 2 verbliebenen Rand 10 aufgelegt und auf diese Weise das Formwerkzeug verschlossen.

Nach dem Aufschäumen und Aushärten des Weichschaumstoffkerns, mit welchem die Rückseite des Bezugstoffes eine feste Haftung eingeht, wird spätenstens jetzt das Vakuum unterbrochen, die obere Formwerkzeughälfte abgehoben, der Spannrahmen 2 hochgeklappt und das fertige Polster entnommen. Gegebenenfalls ist ringsum überschüssiger Bezugstoff abzuschneiden. Der nächste Herstellungsvorgang eines Polsters kann nun eingeleitet werden.

**Patentansprüche**

1. Verfahren zum Herstellen von mit hinterschäumten Bezügen versehenen Polstern, insbesondere Automobilsitzpolstern, wobei ein Bezugstoffabschnitt (9) auf eine Formwerkzeughälfte (1) aufgelegt und gegen die Umrandung (10) des Formhohlraumes (3) gedrückt, an den Formhohlraum (3) Vakuum angelegt und unter Überwindung des auf den Bezugstoffabschnitt (9) einwirkenden Anpreßdruckes dieser in den Formhohlraum (3) eingesaugt und der Kontur des Formhohlraums (3) angepaßt wird und anschließend ein schäumfähiges Reaktionsgemisch in den Formhohlraum (3) eingebracht wird und nach dem Aushärten des Schaumstoffkerns das fertige Polster entnommen wird, dadurch gekennzeichnet, daß der auf den Bezugstoffabschnitt (9) einwirkende Anpreßdruck einer Pulsation unterworfen wird.

2. Verfahren nach Anspruch 1, dadurch gekennzeichnet, daß eine Pulsationsfrequenz von 20 bis 400 Schwingungen pro Minute angelegt wird.

3. Verfahren nach Anspruch 1 oder 2, dadurch gekennzeichnet, daß auf den Bezugstoffabschnitt (9) die Pulsation nur stellenweise einwirken gelassen wird.

4. Verfahren nach einem der Ansprüche 1 bis 3, dadurch gekennzeichnet, daß über den Umfang des Formhohlraumes (3) unterschiedliche Pulsationsfrequenz angelegt wird.

5. Verfahren nach einem der Ansprüche 1 bis 4, dadurch gekennzeichnet, daß über den Umfang des Formhohlraumes (3) unterschiedlicher Anpreßdruck angelegt wird.

6. Verfahren nach einem der Ansprüche 1 bis 5, dadurch gekennzeichnet, daß die Pulsationsfrequenz während eines Einwirkvorganges zeitlich verändert wird.

7. Verfahren nach einem der Ansprüche 1 bis 6, dadurch gekennzeichnet, daß der Anpreßdruck während eines Einziehvorganges zeitlich verändert wird.

8. Vorrichtung zum Herstellen von mit hinterschäumten Bezügen versehenen Polstern, insbesondere Automobilsitzpolstern, bestehend aus einem Formwerkzeug mit zugeordnetem Mischkopf, wobei mindestens eine Formwerkzeughälfte (1) in der Wandung (4) des Formhohlraumes (3) an eine Vakuumquelle (29, 33) angeschlossene Saugöffnungen (5) aufweist, und dieser Formwerkzeughälfte (1) ein auflegbarer Spannrahmen (2) für den in den Formhohlraum (3) einzulegenden Bezugstoffabschnitt (9) zugeordnet ist, dadurch gekennzeichnet, daß dem Spannrahmen (2) ein Pulsator (20, 21, 22, 23, 24, 25, 26, 27, 28, 29, 30, 34, 34, 36, 37, 38, 39) zugeordnet ist.

9. Vorrichtung nach Anspruch 8, dadurch gekennzeichnet, daß der Spannrahmen (2) aus einem Tragrahmen (11) besteht, welchem mindestens eine federnd mit ihm verbundene Spannleiste (13, 14, 31, 32, 20, 21, 22, 23, 24, 25, 26, 27, 28, 29, 33, 34, 35, 36, 37, 38, 39) zugeordnet ist, und der Pulsator (20, 21, 22, 23, 24, 25, 26, 27, 28, 29, 33, 34, 35, 36, 37, 38, 39) an mindestens einer Stelle auf die Spannleiste (13, 14, 31, 32) einwirkt.

10. Vorrichtung nach Anspruch 8 oder 9, dadurch gekennzeichnet, daß die Spannleiste (13, 14) aud mehreren Abschnitten (13, 14) besteht.

11. Vorrichtung nach Anspruch 10, dadurch gekennzeichnet, daß mindestens zwei Abschnitten (13, 14) jeweils ein eigener Pulsator (20, 21, 22, 23, 24, 25, 26, 27, 28, 29, 33, 34, 35, 36, 37, 38, 39) zugeordnet ist.

12. Vorrichtung nach einem der Ansprüche 8 bis 11, dadurch gekennzeichnet, daß zwischen Tragrahmen (11) und Spannleiste (13, 14) über den Umfang des Formhohlraumes (3) gesehen Federelemente (15, 16) angeordnet sind, welche mindestens teilweise zueinander unterschiedliche Steifigkeit aufweisen.

13. Vorrichtung nach einem der Ansprüche 8 bis 12, dadurch gekennzeichnet, daß mehrere Spannleisten (31, 32) parallel angeordnet sind.

14. Vorrichtung nach Anspruch 13, dadurch gekennzeichnet, daß die parallel angeordneten Spannleisten (31, 32) wechselweise mit Pulsation beaufschlagbar sind.

15. Vorrichtung mit einem der Ansprüche 8 bis 14, dadurch gekennzeichnet, daß in der Trennebene (10) der unteren Formwerkzeughälfte (1) eine mit dem Spannrahmen (2) bzw. den Spannleisten (13, 14) korrespondierende elastische Dichtung (19) angeordnet ist.

## Claims

1. A process for the production of cushions provided with back-foamed covers, more especially car seat cushions, in which a piece (9) of covering material is placed on one half (1) of a mould and pressed against the edge (10) of the mould cavity (3), vacuum is applied to the mould cavity (3) and the piece (9) of covering material - overcoming the contact pressure acting thereon - is drawn into the mould cavity (3) and adapted to the contour thereof, a foamable reaction mixture is then introduced into the mould cavity (3) and, after curing of the foam core, the finished cushion is removed, characterized in that contact pressure acting on the piece (9) of covering material is subjected to pulsation.

2. A process as claimed in claim 1, characterized in that a pulsation frequency of 20 to 400 oscillations per minute is applied.

3. A process as claimed in claim 1 or 2, characterized in that the pulsation is locally applied to the piece (9) of covering material.

4. A process as claimed in any of claims 1 to 3, characterized in that the pulsation applied differs in its frequency over the circumference of the mould cavity (3).

5. A process as claimed in any of claims 1 to 4, characterized in that the contact pressure applied differs in its frequency over the circumference of the mould cavity (3).

6. A process as claimed in any of claims 1 to 5, characterized in that the pulsation frequency is varied as a function of time during its application.

7. A process as claimed in any of claims 1 to 6, characterized in that the contact pressure is varied as a function of time during drawing in of the covering material.

8. An apparatus for the production of cushions provided with back-filled covers, more especially car seat cushions, consisting of a mould with an associated mixing head, at least one mould half (1) comprising suction openings (5) connected to a vacuum source (29, 33) in the wall (4) of the mould cavity (3)) and an attachable tenter frame (2) for the piece (9) of covering material to be introduced into the mould cavity (3) being associated with the mould half (1), characterized in that a pulsator (20, 21, 22, 23, 24, 25, 26, 27, 28, 29, 33, 34, 35, 36, 37, 38, 39) is associated with the tenter frame (2).

9. An apparatus as claimed in claim 8, characterized in that the tenter frame (2) consists of a support frame (11) with which at least one tenter bar (13, 14, 31, 32, 20, 21, 22, 23, 24, 25, 26, 27, 28, 29, 33, 34, 35, 36, 37, 38, 39) resiliently connected thereto is associated and in that the pulsator (20, 21, 22, 23, 24, 25, 26, 27, 28, 29, 33, 34, 35, 36, 37, 38, 29) acts on the tenter bar (13, 14, 31, 32) at at least one point.

10. An apparatus as claimed in claim 8 or 9, characterized in that the tenter bar (13, 14) consists of several sections (13, 14).

11. An apparatus as claimed in claim 10, characterized in that a separate pulsator (20, 21, 22, 23, 24, 25, 26, 27, 28, 29, 33, 34, 35, 36, 37, 38, 39) is associated with each of at least two sections (13, 14).

12. An apparatus as claimed in any of claims 8 to 11, characterized in that spring elements (15, 16) differing at least partly from one another in their stiffness are arranged between the supporting frame (11) and the tenter bar (13, 14).

13. An apparatus as claimed in any of claims 8 to 12, characterized in that several tenter bars (31, 32) are arranged parallel to one another.

14. An apparatus as claimed in claim 13, characterized in that the tenter bars (31, 32) arranged parallel to one another are alternately subjected to pulsation.

15. An apparatus as claimed in any of claims 8 to 14, characterized in that an elastic seal (19) corresponding with the tenter frame (2) or rather the tenter bars (13, 14) is arranged on the parting surface (10) of the lower mould half (1).

## Revendications

1. Procédé pour la fabrication de rembourrages équipés de revêtements à face dorsale en mousse, en particulier de rembourrages pour sièges de véhicules automobiles; procédé par lequel on dépose un coupon de matière de revêtement (9) sur une moitié (1) d'outil de formage et on le presse contre le bord (10) de la cavité de formage (3), on applique un vide dans la cavité de formage (3) et, par la pénétration de la pression de serrage s'exerçant sur le coupon de matière de revêtement (9), on l'aspire dans la cavité de formage (3) et on l'ajuste aux contours de la cavité de formage (3); enfin, on introduit un mélange réactionnel apte à former de la mousse, dans la cavité de formage (3) et, après durcissement du noyau du produit alvéolaire, on retire le rembourrage terminé, caractérisé en ce que la pression de serrage s'exerçant sur le coupon de matière de revêtement (9), est soumise à une pulsation.

2. Procédé selon la revendication 1 caractérisé en ce qu'on applique une fréquence de pulsations de 20 à 400 pulsations par minute.

3. Procédé selon la revendication 1 ou 2 caractérisé en ce qu'on ne laisse s'exercer la pulsation sur le coupon de matière de revêtement (9), qu'à certains endroits.

4. Procédé selon l'une quelconque des revendication 1 à 3 caractérisé en ce qu'on applique différentes fréquences de pulsations à la périphérie de la cavité de formage (3).

5. Procédé selon l'une quelconque des revendications 1 à 4 caractérisé en ce qu'on applique une pression de serrage différente sur la périphérie de la cavité de formage (3).

6. Procédé selon l'une quelconque des revendication 1 à 5 caractérisé en ce qu'on modifie, par intervalles, la fréquence de pulsations au cours d'un processus d'insertion ou de mise en place.

7. Procédé selon l'une quelconque des revendication 1 à 6 caractérisé en ce qu'on modifie, par intervalles, la pression de serrage au cours d'un processus de mise en place.

8. Dispositif pour la fabrication de rembourrages équipés de revêtement à face dorsale en mousse, en particulier, de rembourrages pour sièges de véhicules automobiles, constitué d'un outil de formage muni d'une tête de mélange correspondante, au moins une moitié (1) d'outil de formage présentant des ouvertures d'aspiration (5) reliées à une source de vide (29, 33), pratiquées dans la paroi (4) de la cavité de formage (3); un cadre de serrage (2) destiné au coupon de matière de revêtement (9) qui doit venir s'insérer dans la cavité de formage (3), pouvant venir se poser sur cette moitié (1) d'outil de formage à laquelle il est attribué, caractérisé en ce qu'au cadre de serrage (2) est attribué un générateur de pulsations (20, 21, 22, 23, 24, 25, 26, 27, 28, 29, 33, 34, 35, 36, 37, 38, 39) .

9. Dispositif selon la revendication 8 caractérisé en ce que le cadre de serrage (2) est constitué d'un cadre de support (11) auquel est attribuée au moins une barre de tension (13, 14, 31, 32, 20, 21, 22, 23, 24, 25, 26, 27, 28, 29, 33; 34, 35, 36, 37, 38, 39) qui lui est reliée par l'action d'un ressort, le générateur de pulsations (20, 21, 22, 23, 24, 25, 26, 27, 28, 29, 33, 34, 35, 36, 37, 38, 39) s'exerçant à au moins un endroit sur la barre de tension (13, 14, 31, 32).

10. Dispositif selon la revendication 8 ou 9 caractérisé en ce que la barre de tension (13, 14) est constituée de plusieurs sections (13, 14).

11. Dispositif selon la revendication 10 caractérisé en ce que, chaque fois, un générateur de pulsations particulier (20, 21, 22, 23; 24, 25, 26, 27, 28, 29, 33, 34, 35; 36, 37, 38, 39) est attribué à au moins deux sections (13, 14).

12. Dispositif selon l'une quelconque des revendications 8 à 11 caractérisé en ce que des éléments à ressort (15, 16) sont disposés entre le cadre de support (11) et la barre de tension (13, 14), en considérant la périphérie de la cavité de formage (3), ces éléments à ressort présentant au moins partiellement des rigidités mutuellement différentes.

13. Dispositif selon l'une quelconque des revendications 8 à 12 caractérisé en ce que plusieurs barres de tension (31, 32) sont disposées en parallèle.

14. Dispositif selon la revendication 13 caractérisé en ce que les barres de tension (31, 32) disposées en parallèle, peuvent être sollicitées en alternance par des pulsations.

15. Dispositif selon l'une quelconque des revendications 8 à 14 caractérisé en ce qu'un joint étanche élastique (19) est disposé dans le plan de séparation (10) de la moitié inférieure (1) de l'outil de formage, correspondant au cadre de serrage (2) ou aux barres de tension (13, 14).

FIG.1

FIG.2

FIG. 3